**Europäisches Patentamt**

**European Patent Office**

**Office européen des brevets**

(19)

(11) Numéro de publication: **0 236 170**
**A1**

# (12) DEMANDE DE BREVET EUROPEEN

(21) Numéro de dépôt: **87400163.9**

(22) Date de dépôt: **23.01.87**

(51) Int. Cl.⁴: **G 08 B 13/18, H 04 M 11/04**

(30) Priorité: **23.01.86  FR 8600947**

(43) Date de publication de la demande: **09.09.87**
**Bulletin 87/37**

(84) Etats contractants désignés: **AT BE CH DE ES FR GB GR IT LI LU NL SE**

(71) Demandeur: **SEGIN SOCIETE D'ETUDES ET DE GESTION INFORMATIQUE NOUVELLE, 28, Place Rihour, F-59000 Lille (FR)**

(72) Inventeur: **Leroy, Jean-Pierre, 76 rue Foch, F-59790 Ronchin (FR)**

(74) Mandataire: **Derambure, Christian, Cabinet BUGNION ASSOCIES SARL 116, boulevard Haussmann, F-75008 Paris (FR)**

(54) **Dispositif et procédé de surveillance à distance de sites, comportant des moyens de détection d'évenements anormaux, des moyens d'écoute phoniques et des moyens d'observation vidéo.**

(57) Dispositif et procédé de surveillance à distance d'au moins un site caractérisé en combinaison en ce qu'il comporte sur chacun des sites à surveiller d'une part des moyens (1) analyseurs d'ambiance comportant des moyens (2) de détection d'événements anormaux, des moyens (3) capteurs d'écoute sonique et des moyens (4) d'observation vidéo, et d'autre part des moyens (5) de transmission des informations entre les moyens (1) analyseurs d'ambiance et le poste de surveillance, en ce que les moyens (4) d'observation vidéo fournissent en permanence un signal vidéo aux moyens (5) de transmission, en ce que les moyens (5) de transmission sont normalement à l'état inactif et en ce que ces moyens (5) de transmission sont mis à l'état actif soit sur appel du poste de surveillance, soit par les moyens (2) de détection au moins lorsqu'un ou plusieurs des événements suivants se déroulent:

— bruits et/ou chocs d'amplitude supérieure à une amplitude donnée sur le site concerné,

— défaut sur le signal vidéo fourni par les moyens (4) d'observation vidéo,

— défaut d'alimentation électrique et/ou d'éclairage sur le site concerné,

— défaut d'une partie des moyens (5) de transmission.

ACTORUM AG

# 0236170

## DISPOSITIF ET PROCEDE DE SURVEILLANCE A DISTANCE DE SITES COMPORTANT DES MOYENS DE DETECTION D'EVENEMENTS ANORMAUX, DES MOYENS D'ECOUTE PHONIQUES ET DES MOYENS D'OBSERVATION VIDEO

L'invention concerne un dispositif et un procédé de surveillance à distance de sites. Elle est plus particulièrement destinée à la surveillance à distance d'une pluralité de sites bancaires à partir d'un poste central de surveillance.

On connait déjà des dispositifs de protection des agences bancaires, et plus particulièrement de leurs salles fortes ou de leurs salles de coffres. Les protections connues sont particulièrement efficaces en période de fermeture des agences, c'est-à-dire lorsque personne n'est présent sur le site. Par contre, ces dispositifs de protection s'avèrent tout à fait inefficaces lorsque l'agence est ouverte, et que des personnes (clients, personnels, ...) sont présents sur le site. En effet, ces dispositifs de protection ne permettent pas de faire la différence entre des évènements dits normaux (tel que l'accès aux coffres par les clients) et des évènements dits anormaux (tels que la présence de malfaiteurs ou autres).

L'idée de surveiller à distance ces sites bancaires est donc rapidement apparue pour assurer une protection des sites pendant les heures d'ouverture. On connait donc déjà des dispositifs de sécurité surveillant à distance les sites bancaires. Ces dispositifs permettent de surveiller une pluralité de sites à partir d'un poste central de surveillance. Une partie du dispositif est donc située sur chacun des sites à surveiller, tandis que l'autre partie est située sur le lieu du poste de surveillance. Les dispositifs de surveillance à distance de sites connus comportent des moyens qui analysent l'ambiance sur chacun des sites en permanence, et permettent de détecter avec une assez bonne précision un évènement anormal. Les moyens d'analyse

# 0236170

comporte également des moyens d'écoute sonique du site qui permettent au personnel du poste de surveillance d'écouter les bruits qui sont émis sur le site afin de s'assurer que l'évènement qui a déclenché l'alarme par les moyens d'analyse est effectivement un évènement anormal. Les procédés de surveillance connus comportent donc essentiellement deux étapes : une étape de détection d'un évènement anormal et une deuxième étape dite de "levée de doute" après laquelle la décision de donner l'alarme est prise ou non.

Les procédés et dispositifs connus de surveillance à distance de sites, donnent satisfaction. Cependant, on a remarqué que leur utilisation implique un grand nombre de fausses alarmes. En effet, le problème essentiel qui se pose est celui de la détection sans aucun doute possible du caractère anormal d'un évènement qui se déroule sur le site. Ainsi, avec un dispositif connu un surveillant qui détecte une alarme peut interpréter une simple visite technique comme une effraction et alerter à tort les services de police. Or, il est évident que l'importance de l'opération des forces de police est telle que toute fausse alerte doit être écartée. Afin d'éviter ces fausses alertes, les dispositifs connus sont munis de plus en plus de moyens d'analyse et de détection ultra-sophistiqués, dont le prix de revient est prohibitif, et qui, en fin de compte, ne permettent pas une levée de doute absolument parfaite. Il s'agit par exemple de capteurs soniques ou sismiques, de radars, de détecteurs de présence, de détecteurs de fumée, ... etc...

La présente invention vise à remédier aux inconvénients précités des dispositifs et procédés connus de surveillance à distance de sites, et a pour objet un dispositif et un procédé de surveillance à distance de sites qui permettent d'éviter toute fausse alerte, qui détecte automatiquement, sans intervention humaine et de façon indécelable depuis le site surveillé, tout évènement anormal, par exemple une agression à mains armées, une prise d'otages, etc... Une fois l'évènement anormal détecté de façon sûre, le poste de surveillance peut donner l'alarme au service de police concerné. Le dispositif et le procédé selon l'invention seront particulièrement efficaces avec les nouvelles méthodes de police, qui consistent à laisser faire les malfaiteurs lorsqu'ils sont sur le site, et à encercler le quartier pour arrêter ces agresseurs une fois qu'ils sont sortis de l'agence bancaire, sans risque pour les clients, ou le personnel.

Un autre but de l'invention est de proposer un tel dispositif dont le prix de revient est faible, en tout cas inférieur ou égal à celui des dispositifs connus.

Pour ce faire, un dispositif de surveillance à distance de sites selon l'invention est caractérisé en combinaison en ce qu'il comporte d'une part, sur chacun des sites à surveiller, des moyens analyseurs d'ambiance comportant des moyens de détection d'évènements anormaux, des moyens capteurs d'écoute sonique, et des moyens d'observation vidéo, et d'autre part des moyens de transmission des informations entre lesdits moyens analyseurs d'ambiance et le poste de surveillance, en ce que les moyens d'observation vidéo fournissent en permanence un signal vidéo aux moyens de transmission, en ce que les moyens de transmission sont normalement à l'état inactif et en ce que ces moyens de tansmission sont mis à l'état actif soit sur appel du poste de surveillance, soit par les moyens de détection, au moins lorsqu'un ou plusieurs des évènements suivants se produit :

- Bruits et/ou chocs d'amplitude supérieure à une amplitude donnée sur le site concerné,

- Défaut sur le signal vidéo fournit par les moyens d'observation vidéo,

- Défaut d'alimentation électrique et/ou d'éclairage sur le site concerné,

- Défaut d'une partie des moyens de transmission.

Selon l'invention, les moyens de détection comportent des moyens d'analyse du signal vidéo émis par les moyens d'observation vidéo, et déclenchent la mise à l'état actif des moyens de transmission dès que ce signal vidéo est modifié anormalement, notamment par masquage ou éblouissement ou déréglage ou déplacement ou défaut de fonctionnement ou autre, des moyens d'observations.

De plus, selon l'invention, les moyens de détection comportent des moyens capteurs des bruits et/ou chocs survenant sur le site, et des moyens d'analyse et de comptage des signaux émis par ces moyens capteurs, qui fournissent un signal de défaut aux moyens de transmission au moins dans l'un des cas suivants :

- le nombre $N$, $N'$,... de bruits et/ou chocs détectés d'amplitude supérieure à respectivement au moins une amplitude de $A_1$, $A_2$,... donnée pendant respectivement au moins un temps $t_1$, $t_2$,... donné, est supérieur à respectivement au moins un nombre $N_1$, $N_2$,... donné.

- au moins un bruit et/ou choc à une amplitude supérieure à respectivement au moins une amplitude $B_1$ donnée pendant un temps supérieur à respectivement au moins un temps $t'_1$,... donné.

Les moyens capteurs de bruits et/ou chocs sont avantageusement des moyens capteurs d'écoute sonique à seuil de déclenchement réglable, par exemple, au moins un microphone miniature du type piézo-électrique, et sont avantageusement disposés sur le site à proximité des moyens d'observation vidéo. Les amplitudes de seuils $A_1$, $A_2$,...,$B_1$,... et/ou des temps de comptage $t_1$, $t_2$,..., $t'_1$,... et/ou les nombres seuils $N_1$, $N_2$,... sont avantageusement réglables indépendamment.

Les moyens de transmission comportent avantageusement plusieurs lignes téléphoniques, et sont également mis à l'état actif par les moyens de détection lorsque ceux-ci détectent un défaut sur au moins l'une de ces lignes téléphoniques. Les moyens de transmission comportent également des moyens d'appel automatique du poste de surveillance par ces lignes téléphoniques, établissant automatiquement les communications nécessaires à la transmission des informations entre le site concerné et le poste de surveillance, lorsque les moyens de transmission sont à l'état actif. De préférence, les moyens de transmission comportent deux lignes téléphoniques : l'une étant réservée strictement à la transmission des images vidéos tandis que l'autre est réservée tout d'abord à la transmission d'un code numérique d'alarme initiale permettant d'identifier le site concerné et l'évènement anormal à l'origine du passage à l'état actif des moyens de transmission, et ensuite à la transmission des sons en provenance des moyens capteurs d'écoute sonique.

Selon l'invention, les moyens de réception du poste de surveillance comportent avantageusement des moyens informatiques fournissant au personnel du poste de surveillance, en fonction du code numérique d'alarme initiale qui leur est fourni, tous les renseignements utiles concernant le site, l'évènement anormal qui s'est produit, et les consignes à appliquer (personne à contacter, numéro de téléphone, etc...). De plus, les moyens informatiques du poste de surveillance comportent des moyens de calcul statistique permettant d'optimiser les réglages des moyens de détection sur chacun des sites surveillés.

Dans un procédé selon l'invention, dès que les moyens de transmission sont mis à l'état actif, notamment par les moyens de détection lorsqu'ils ont détectés un évènement anormal sur les sites, les étapes suivantes se déroulent chronologiquement :

- Etablissement d'au moins une liaison entre le site concerné et le poste de surveillance,

- transmission au poste de surveillance d'un signal d'alarme initiale permettant d'identifier le site concerné et de connaître approximativement la nature de l'évènement anormal, notamment bruits ou chocs sur ce site, défaut des moyens d'observation vidéo, test, défaut sur secteur, défaut des moyens de transmission, défaut des dispositifs sur le site,

- transmission au poste de surveillance des images vidéo en provenance des moyens d'observation et/ou des sons en provenance des moyens capteurs d'écoute sonique, et,

- analyse du site par le personnel du poste de surveillance grâce aux images et/ou aux sons reçus, et identification exacte de l'évènement anormal,

- gestion de l'alarme par le personnel du poste de surveillance.

Dans un procédé selon l'invention, on établit deux liaisons téléphoniques entre le site concerné et le poste de surveillance, la transmission des images vidéo étant déclenchée simultanément à la transmission du signal d'alarme initiale, et la transmission des sons étant déclenchée sur la même liaison que la transmission du signal d'alarme, immédiatement après.

Ainsi, un dispositif et un procédé de surveillance à distance selon l'invention permettent au poste de surveillance de détecter absolument tous les évènements anormaux qui se produisent, et d'effectuer une levée de doute quasiment parfaite, grâce aux moyens capteurs d'écoute sonique et aux moyens d'observation vidéo. On remarquera en particulier qu'un dispositif selon l'invention est particulièrement simple et de prix de revient très faible. En pratique, il a été constaté que le prix de revient d'un dispositif selon l'invention est du même ordre que celui des dispositifs de l'art antérieur pour lesquels des moyens de détection sophistiqués sont nécessaires. Ainsi, dans un dispositif selon l'invention, les moyens capteurs des moyens de détection sont relativement simples puisqu'ils ne permettent pas l'identification exacte de l'évènement anormal, mais les moyens permettant la levée de doute, étant constitués d'une part de capteurs d'écoute sonique et d'autre part des moyens d'observation vidéo sont beaucoup plus fiables que dans l'art antérieur.

D'autres caractéristiques et avantages de l'invention apparaitront à la lecture de la description suivante de ces modes de réalisation préférentielle faite en référence aux figures annexées dans lesquelles :

- La figure 1 est une vue schématique synoptique d'un dispositif selon l'invention.

- La figure 2 est une vue illustrant un mode de réalisation des moyens d'analyse du signal vidéo d'un dispositif selon l'invention.

- La figure 3 est une vue illustrant un mode de réalisation des moyens d'analyse et de comptage d'un dispositif selon l'invention.

L'invention concerne un dispositif de surveillance à distance d'au moins un site, de préférence de plusieurs sites, à partir d'un poste central unique de surveillance ou d'un nombre réduit de postes de surveillance. Les sites surveillés sont par exemple des agences bancaires, salles de coffres, ou autres. La surveillance à distance permet de prévenir toute agression ou tentative d'agression.

Sur les figures, et dans la suite, on considère, pour plus de simplicité, le cas d'un seul site et d'un seul poste de surveillance, étant entendu que dans la pratique plusieurs sites peuvent être reliés à un même poste central de surveillance, voire même à plusieurs postes de surveillance.

Chaque site est connecté au poste central de surveillance via un réseau de télécommunications, tel que le réseau commuté téléphonique.

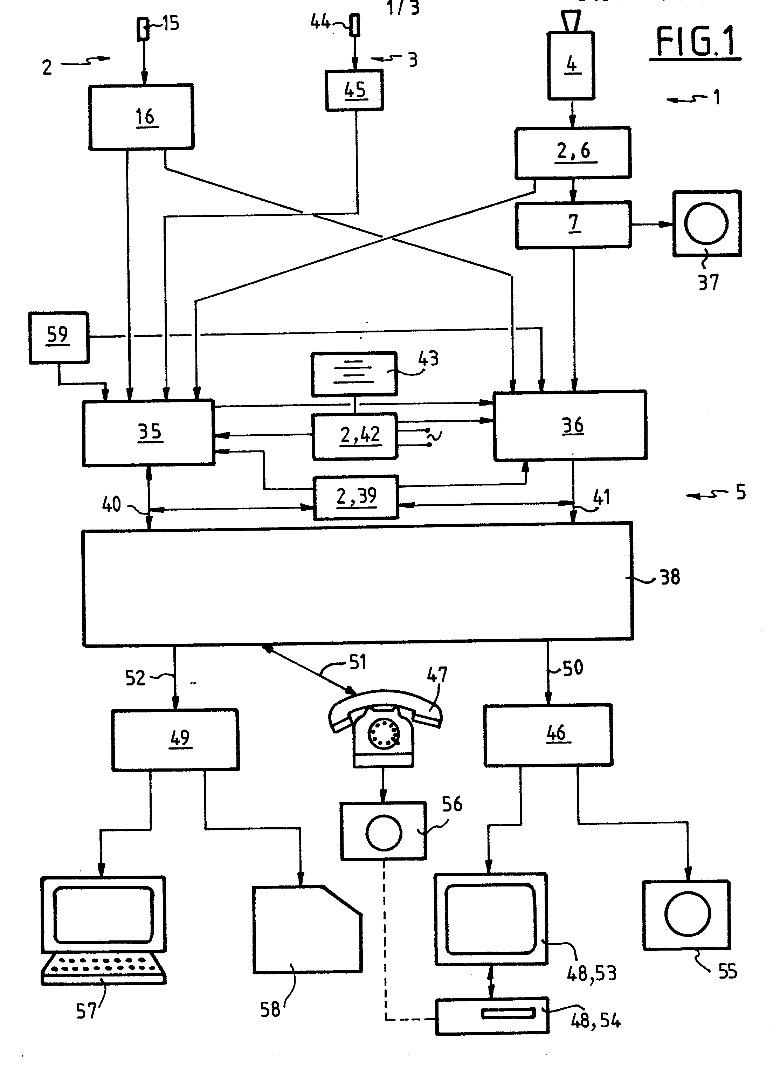

Sur la figure 1, les appareils situés sur le site sont représentés sur la partie supérieure, tandis que les appareils constituant le poste central de surveillance sont représentés sur la partie inférieure.

Un dispositif selon l'invention comporte des moyens 1 analyseurs d'ambiance sur chacun des sites à surveiller. Ces moyens 1 analyseurs d'ambiance comportent d'une part des moyens 2 de détection d'évènements anormaux qui déclenchent une alarme initiale, et d'autre part des moyens 3 capteurs d'écoute sonique et des moyens 4 d'observation vidéo qui permettent d'effectuer à distance à partir du poste de surveillance des investigations plus approfondies sur l'ambiance qui règne sur le site, dès que l'alarme initiale a été donnée. A la suite de ces investigations, le personnel du poste de surveillance connait la nature exacte de l'évènement anormal, et peut ou non transmettre l'alarme, aux services de police par exemple.

Les moyens 3 capteur d'écoute sonique sont par exemple constitués d'au moins un microphone piézo-électrique 44 et d'un circuit préamplificateur 45.

Un dispositif selon l'invention comporte en outre des moyens 5 de transmission des informations entre les moyens 1 analyseurs d'ambiance et le poste de surveillance. Ces moyens 5 de transmission sont normalement à l'état inactif où ils ne véhiculent aucune information entre le site et le poste de surveillance.

Par contre, les moyens 2 de détection sont actifs en permanence, ainsi que les moyens 4 d'observation vidéo qui fournissent en permanence un signal vidéo aux moyens 5 de transmission.

Les moyens 5 de transmission sont mis à l'état actif où ils transmettent effectivement les informations issues des moyens 1 analyseurs d'ambiance au poste de surveillance, soit sur appel du poste de surveillance (par exemple pour effectuer un test), soit par les moyens 2 de détection lorsque ceux-ci ont détecté un évènement anormal tel que :

- bruits et/ou chocs d'amplitude anormalement importante.
- défaut sur le signal vidéo fourni par les moyens 4 d'observation vidéo
- défaut d'alimentation électrique et/ou d'éclairage sur le site
- défaut d'une partie des moyens 5 de transmission

Pour ce faire, les moyens 2 de détection comportent des moyens 6 d'analyse du signal vidéo émis par les moyens 4 d'observation vidéo. Ces moyens 6 d'analyse du signal vidéo sont connectés entre les moyens 4 d'observation vidéo et des moyens 7 digitaliseurs des moyens 5 de transmission qui transforment le signal vidéo en un signal numérique transmissible par le réseau commuté téléphonique. Les moyens 6 d'analyse détectent toute modification anormale du signal vidéo et déclenchent, dans ce cas, la mise à l'état actif des moyens 5 de transmission. Les modifications anormales prévues sont par exemple dûes au masquage, à l'éblouissement, au déréglage, au déplacement, au défaut de fonctionnement, des moyens 4 d'observation vidéo. Les moyens 4 d'observation vidéo sont par exemple constitués d'au moins une caméra vidéo dissimulée dont l'objectif à un diamètre inférieur à 5 mm, notamment de l'ordre de 3,5 mm. Ces caméras à petit objectif sont connues. On peut prévoir plusieurs caméras, si la disposition du site l'exige, pour éviter les angles morts.

Les moyens 6 d'analyse du signal vidéo détectent, dans un mode de réalisation préférentiel, toute variation en amplitude du signal vidéo entre deux valeurs de seuil : un seuil bas, et un seuil haut. Ces seuils sont avantageusement réglables pour pouvoir ajuster la sensibilité des moyens 6 d'analyse selon le contexte du site surveillé et permettre de détecter tout masquage, déréglage (par exemple de distance ou de focale), déplacement, éblouissement ou autre, engendrant des variations d'amplitude du signal vidéo en dehors des valeurs de seuil.

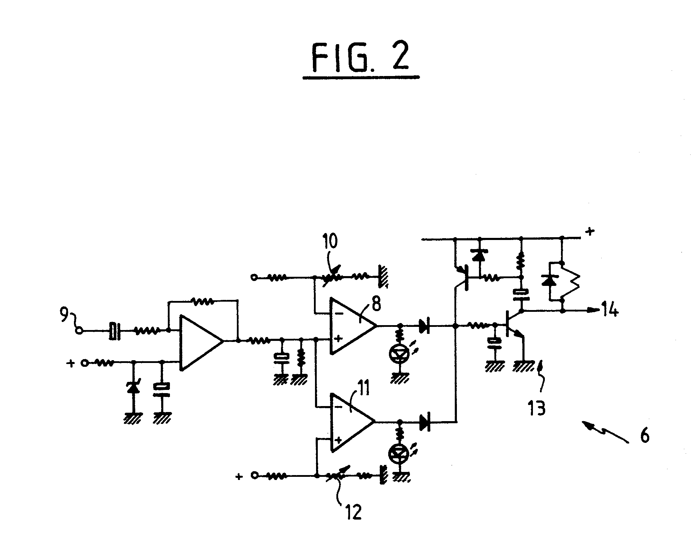

On a représenté en figure 2 un mode de réalisation préférentiel des moyens 6 d'analyse du signal vidéo, qui comparent l'amplitude du signal vidéo à un seuil haut et à un seuil bas d'amplitude, toute variation de l'amplitude du signal vidéo en dehors de l'intervalle défini par ces seuils déclenchant la mise à l'état actif des moyens 5 de transmission. Un amplificateur 8 compare l'amplitude du signal vidéo entré en 9, au seuil haut déterminé par la valeur de la résistance variable 10, tandis que l'amplificateur 11 compare cette amplitude au seuil bas déterminé par la valeur de la résistance variable 12. Le circuit 13 met en forme une impulsion de commande d'un relais fournie en 14 aux moyens 5 de transmission pour en déclencher la mise à l'état actif.

Les moyens 2 de détection comportent d'autre part des moyens 15 capteurs. Dans le mode de réalisation préférentiel, ces moyens 15 capteurs sont des moyens 15 capteurs d'écoute sonique de même nature que les moyens 3 capteurs d'écoute sonique. Ces moyens 15 capteurs des moyens 2 de détection fonctionnent en permanence, alors que les moyens 3 capteurs d'écoute sonique ne fonctionnent qu'à la suite d'une alarme initiale déclenchée par les moyens 2 de détection. Les moyens 15 capteurs sont par exemple constitués d'au moins un microphone miniature piézo-électrique à seuil de déclenchement réglable, et ne fournissent que les signaux correspondant à des sons dont l'amplitude est supérieure à une amplitude As donnée. Ces moyens 15 capteurs peuvent être d'une autre nature (radars, détecteurs de fumée...). Avantageusement, les moyens 15 capteurs sont disposés à proximité des moyens 4 d'observation vidéo de façon que la tentative de destruction des moyens 4 d'observation vidéo soient détectés immédiatement. Les moyens 15 capteurs sont connectés à des moyens 16 d'analyse et de comptage des signaux qu'ils émettent. Ces moyens 16 d'analyse et de comptage des moyens 2 de détection déclenchent la mise à l'état actif des moyens 5 de transmission au moins dans l'un des cas suivants :

- Le nombre N de bruits et/ou chocs détectés pendant un temps $t_1$ donné sur le site par les moyens 15 capteurs qui ont une amplitude supérieure à une amplitude $A_1$ donnée est supérieur à un nombre $N_1$ donné,

- un bruit et/ou choc détecté sur le site a une amplitude supérieure à une amplitude $B_1$ donnée pendant un temps supérieur à un temps $t'_1$.

On peut multiplier chacun de ces cas avantageusement avec des triplets de valeurs $(A_2, t_2, N_2), \ldots, (An, tn, Nn)$ distinctes de $(A_1, t_1, N_1)$ et/ou des couples de valeurs $(B_2, t'_2), \ldots, (Bm, t'm)$ distinctes de $(B_1, t'_1)$ en fonction des sécurités voulues et du contexte, pour définir le caractère anormal d'un bruit et/ou choc sur le site. Ainsi, dans le mode de réalisation préférentiel, les moyens 16 d'analyse et de comptage déclenchent la mise à l'état actif des moyens 5 de transmission au moins dans les cas où le nombre N de bruits et/ou chocs détectés pendant un temps $t_1$ donné, d'amplitude supérieure à une amplitude $A_1$ donnée, est supérieur à un nombre $N_1$ donné, ou bien le nombre N' de bruits et/ou chocs détectés pendant un temps $t_2$ donné, d'amplitude supérieure à une amplitude $A_2$ donnée, est supérieur à un nombre $N_2$ donné, le triplet $(A_1, t_1, N_1)$ étant différent du triplet $(A_2, t_2, N_2)$, ou bien au moins un bruit et/ou choc a une amplitude supérieure à une amplitude $B_1$ donnée pendant un temps supérieur à un temps $t'_1$ donné.

De préférence $A_1$ est égal à $A_2$ et correspond à l'amplitude As de seuil des moyens 15 capteurs d'écoute sonique à seuil de déclenchement. En outre, les moyens 2 de détection comportent avantageusement des moyens de réglage des amplitudes de seuil $A_1$, $A_2, \ldots, B_1, \ldots$ et/ou des temps de comptage $t_1, t_2, \ldots, t'_1 \ldots$ et/ou

des nombres seuils $N_1$, $N_2$,... des moyens 16 d'analyse et de comptage, chacune des valeurs précédentes étant réglable indépendamment des autres.

Par exemple $t_1$ est de l'ordre de 30 s, $t_2$ est de l'ordre de 1 min 30 s, et $t'_1$ est de l'ordre de 15s.

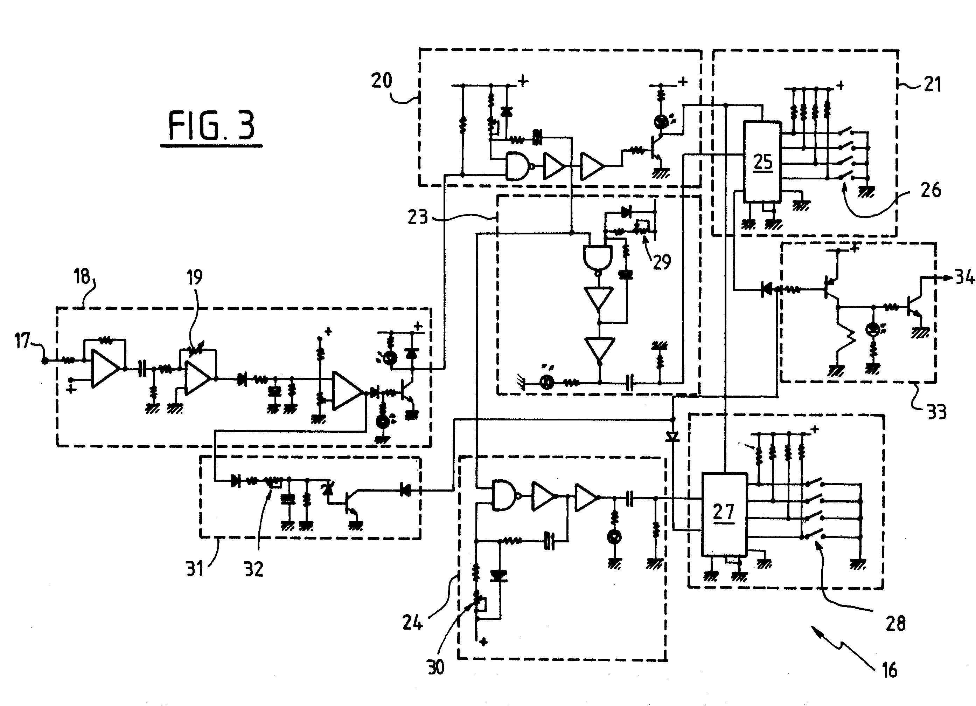

Un mode de réalisation préférentiel des moyens 16 d'analyse et de comptage est illustré en figure 3. Le signal issu des moyens 15 capteurs entre en 17 dans un circuit comprarateur d'entrée 18 qui compare l'amplitude et la durée du signal à des valeurs de référence. L'amplitude de référence est réglable grâce à une résistance variable 19 et correspond aux amplitudes de seuil $A_1$, $A_2$, $B_1$ précitées qui sont égales pour ce mode de réalisation. Le signal est ensuite mis en forme dans un circuit de mise en forme 20 qui alimente deux circuits de décomptage 21, 22. Le circuit de mise en forme 20 déclenche également un circuit de temporisation courte 23, et un circuit de temporisation longue 24. Le circuit de temporisation courte 23 émet un signal de réinitialisation au circuit de décomptage 21, dont le registre 25 prend alors la valeur préréglée par les quatre interrupteurs 26. De même, le circuit de temporisation longue 24 émet un signal de réinitialisation au circuit de décomptage 22, dont le registre 27 prend la valeur préréglée par les quatre interrupteurs 28. Les interrupteurs 26, 28 permettent donc de régler les valeurs $N_1$, $N_2$ des nombres seuils précités. Des résistances variables 29, 30 permettent respectivement de prérégler les constantes de temps des circuits de temporisation 23, 24, correspondant aux durée $t_1$, $t_2$ précitées.

Un circuit de détection de bruit continu 31 est alimenté en parallèle par le signal en sortie du circuit comparateur d'entrée 18. Sa constante de temps, correspondant à la durée $t'_1$ d'un bruit continu déclenchant l'alarme initiale, est réglable grâce à la résistance variable 32.

Les circuits de détection de bruit continu 31, et de décomptage 21 et 22 alimentent un circuit de mise en forme 33 d'une impulsion de commande d'un relais qui est fournie en 34 aux moyens 5 de transmission pour en déclencher la mise à l'état actif.

L'homme du métier saura adapter les caractéristiques des composants représentés en figure 3 selon les valeurs désirées en fonction du contexte.

Les moyens 2 de détection comportent également des moyens 42 d'analyse de l'alimentation électrique disponible sur le site (généralement le secteur). On prévoit aussi une source 43 d'énergie électrique de secours, notamment une batterie d'accumulateurs alimentant les moyens 2 de détection et/ou 3 capteurs d'écoute sonique, en cas de défaillance de l'alimentation électrique disponible normalement sur le site. Pour des raisons de coût, les moyens 4 d'observation vidéo ne sont, en général, pas alimentés par la batterie 43 en cas de coupure de courant. Cela peut cependant également être pévu. Les moyens 42 d'analyse émettent un signal de commande déclenchant la mise à l'état actif des moyens 5 de transmission losqu'ils détectent une défaillance sur le secteur.

Les moyens 5 de transmission comportent sur le site un transmetteur-numéroteur 35 digital-phonique, et le digitaliseur 7 qui fournit les images sous forme numérique à un autre transmetteur-numéroteur 36 digital d'images vidéo numérisées. Un magnétophone 37 permet d'enregistrer les images numérisées sur le site. Selon l'invention le transmetteur-numéroteur 35, à réception de l'impulsion de commande en provenance des moyens 2 de détection (notamment en 14 et 34) déclenchant la mise à l'état actif des moyens 5 de transmission, établit une liaison avec le poste de surveillance et transmet un code numérique d'alarme initiale permettant d'identifier le site concerné et la nature approximative de l'évènement anormal qui est à l'origine du passage à l'état actif des moyens 5 de transmission.

Le transmetteur-numéroteur 35, après avoir reçu du poste de surveillance un signal d'acquis du code numérique d'alarme initiale, libère la première liaison et établit une autre liaison avec le poste de surveillance par laquelle il transmet les sons

0236170

en provenance des moyens 3 capteurs d'écoute sonique.

Le transmetteur-numéroteur 36 vidéo, à réception des mêmes signaux issus des moyens 2 de détection, établit une liaison avec le poste de surveillance et y transmet les images vidéo numérisées en provenance des moyens 4 d'observation via les moyens 7 digitaliseurs.

Les moyens 5 de transmission comportent plusieurs lignes téléphoniques, et des moyens d'appel automatique du poste de surveillance par ces lignes téléphoniques 38, établissant automatiquement les communications nécessaires à la transmission des informations entre le site concerné et le poste de surveillance lorsque les moyens 5 de transmission sont mis à l'état actif.

Les moyens 2 de détection comportent alors des circuits 39 de test des lignes téléphoniques qui déclenchent la mise à l'état actif des moyens 5 de transmission en cas de défaut sur une ligne téléphonique, de la même façon que les moyens 6 d'analyse du signal vidéo, et 16 de comptage et d'analyse.

Les transmetteurs 35, 36 sont également des numéroteurs, et constituent donc en pratique lesdits moyens d'appel automatique.

Dans un mode de réalisation non représenté, les moyens 5 de transmission comportent au moins une ligne téléphonique réservée exclusivement à la transmission des images vidéo en provenance des moyens 4 d'observation, vers le poste de surveillance; au moins une ligne téléphonique réservée exclusivement à la transmission des sons en provenance des moyens 3 capteurs d'écoute sonique; au moins une ligne téléphonique réservée exclusivement à la transmission d'informations numériques générant une alarme initiale au poste de surveillance, permettant de gérer la détection d'un évènement anormal.

Dans le mode de réalisation préférentiel représenté, les moyens 5 de transmission comportent deux lignes 40, 41 téléphoniques sur le site : la première 40, allouée au transmetteur-numéroteur 35 phonique-digital est réservée tout d'abord à la transmission du code numérique d'alarme initiale déclenchée par les moyens 2 de détection, et ensuite à la transmission des sons en provenance des moyens 3 capteurs d'écoute sonique ; la seconde 41, allouée au transmetteur-numéroteur 36 vidéo est réservée strictement à la transmission des images vidéo en provenance des moyens 4 d'observation vidéo.

Les moyens 5 de transmission comportent d'une part sur chaque site les moyens 7 de conversion du signal vidéo issu des moyens 4 d'observation vidéo en un signal numérique transmissible par la liaison téléphonique 41, et d'autre part au poste de surveillance des moyens 46 de réception qui transforment ce signal numérique reçu au poste de surveillance en un signal vidéo permettant à des moyens 48 de production d'images vidéo de générer des images.

Une ligne téléphonique 50 sur le poste de surveillance est connectée aux moyens 46 de réception qui comportent des moyens automatiques d'établissement de la communication lorsque le transmetteur-numéroteur 36 vidéo appelle par sa ligne 41.

Les moyens 48 de production d'images comportent avantageusement au moins un écran 53 et un magnétoscope 54. Un magnétophone 55 est prévu pour enregistrer directement le signal vidéo numérisé au poste de surveillance.

Les moyens 5 de transmission comportent également au poste de surveillance, des moyens 47 récepteurs d'écoute sonique, connectés à une ligne 51 téléphonique du poste de surveillance, et permettant de recevoir les sons captés par les moyens 3 capteurs d'écoute sonore sur le site. Ces moyens 47 récepteurs d'écoute comportent des moyens automatiques d'établissement de la communication lorsque le transmetteur-numéroteur 35 digital-phonique appelle leur numéro par sa ligne 40. Les moyens 47 récepteurs d'écoute sonique sont constitués d'au moins un poste téléphonique, ou d'un dispositif d'amplification du haut-parleur , ou autre. Un magnétophone 56 peut être également prévu pour enregistrer les sons reçus. Ces sons peuvent aussi être mixés à l'image vidéo et enregistrés sur le magnétoscope 54.

0236170

Les moyens 5 de transmission comportent également des moyens 49 digitaux de réception du code numérique d'alarme initiale connectés à une ligne téléphonique indépendante 52. Ces moyens 49 digitaux de réception comportent aussi des moyens automatiques d'établissement de la communication lorsque le transmetteur-numéroteur 35 digital-phonique appelle leur numéro par sa ligne 40.

Selon l'invention, le dispositif comporte au poste de surveillance des moyens 57 informatiques fournissant au personnel du poste de surveillance, en fonction du code numérique d'alarme initiale qui leur est fourni, tous les renseignements utiles concernant le site, l'évènement anormal qui s'est produit, et les consignes à appliquer. Les moyens 57 informatiques jouent donc le rôle d'un cahier de consignes beaucoup plus complet, et sans erreur. Ils apportent une grande sécurité dans le dispositif et peuvent par exemple surveiller la présence et l'attention du personnel en déclenchant une alarme; Ils comportent avantageusement des moyens de calcul statistique permettant d'optimiser les réglages des moyens 2 de détection sur chacun des sites surveillés, ou d'apprécier les risques sur chaque site. Les moyens 57 informatiques fournissent des renseignements très complets, tels que numéro de téléphone du poste de police le plus proche du site qui transmet l'alarme initiale, numéro du site, adresses, consignes...

Ainsi, à la réception d'un code numérique d'alarme initiale indiquant un évènement anormal sur un site, les moyens 49 digitaux de réception décodent le code numérique d'alarme initiale en identifiant le site concerné et l'évènement anormal qui s'est produit, l'inscrivent sur une imprimante 58 et/ou le fournissent aux moyens 57 informatiques qui indiquent en clair toutes les consignes à exécuter en réponse à la détection de l'évènement anormal, et fournissent les renseignements nécessaires à la gestion rapide de cette alarme initiale.

Une source d'énergie électrique de secours est prévue sur le poste de surveillance pour assurer l'alimentation électrique

16

0236170

permanente, notamment des moyens 49 digitaux de réception.

On prévoit également avantageusement une alarme sonore sur le poste de surveillance, qui est déclenchée à réception d'un code d'alarme initiale (sauf pour la procédure de test).

Des moyens d'alarme locale sont également prévus sur chaque site, et sont déclenchés par les moyens 2 de détection, notamment quand ceux-ci détectent une défaillance des moyens 5 de transmission.

Les dispositifs prévus sur chaque site sont disposés dans une armoire unique, et les moyens 2 de détection comportent des moyens 59 capteurs détectant une agression sur cette armoire, telle qu'une ouverture de la porte, chocs..., et qui déclenchent aussi la mise à l'état actif des moyens 5 de transmisssion et l'émission d'un code numérique d'alarme initiale.

Le dispositif peut comprendre sur chaque site deux armoires situées à deux endroits distincts, qui comportent respectivement les différents éléments du dispositif selon l'invention. De même on peut prévoir un poste de surveillance supplémentaire en secours.

Dans un procédé selon l'invention de surveillance à distance d'au moins un site à partir d'un poste central de surveillance, les sites et le poste étant reliés par des moyens 5 de transmission dès que les moyens 5 de transmission sont mis à l'état actif, notamment par des moyens 2 de détection lorsqu'ils ont détecté un évènement anormal sur un site, les étapes suivantes se déroulent chronologiquement :

- Etablissement d'au moins une liaison entre le site concerné et le poste de surveillance,

- transmission au poste de surveillance d'un signal d'alarme initiale permettant d'identifier le site concerné et de connaître approximativemet la nature de l'évènement anormal, notamment bruits ou chocs sur site, défaut de moyens 4 d'observation vidéo, test, défaut sur secteur,défaut des moyens 5 de transmission, défaut des dispositifs sur le site,

- transmission au poste de surveillance des images vidéo en provenance des moyens 4 d'observation et/ou des sons en provenance des moyens 3 capteurs d'écoute sonique, et

- analyse du site par le personnel du poste de surveillance grâce aux images et/ou aux sons reçus, et identification exacte de l'évènement anormal,

- gestion de l'alarme par le personnel du poste de surveillance.

De préférence, on établit deux liaisons téléphoniques entre le site concerné et le poste de surveillance, la transmission des images vidéo étant déclenchée simultanément à la transmission du signal d'alarme initiale, et la transmission des sons étant déclenchée sur la même liaison que la transmission du signal d'alarme, immédiatement après.

De préférence, les opérations nécessaires à la bonne gestion de l'alarme initiale sont dictées au personnel du poste de surveillance par des moyens 57 informatiques en fonction du signal d'alarme initiale qui leur est fourni.

Le tableau 1, résume les différents cas possibles, et la façon dont ils sont gérés par un dispositif et un procédé selon l'invention.

Lors de la détection de bruits et/ou chocs sur le site par les moyens 15 capteurs et 16 d'analyse et de comptage, seule l'alarme locale sur site n'est pas déclenchée pour éviter les phénomènes de panique.

Lors d'un défaut du signal vidéo détecté par les moyens 6 d'analyse du signal vidéo, le code numérique d'alarme initiale est transmis, ainsi que les sons. L'image vidéo également si cela est possible.

La procédure de test est lancée par le poste de surveillance. Celle-ci peut être déclenchée automatiquement de façon cyclique par exemple grâce à une horloge intégrée dans l'armoire sur le site, ou être faite en concertation avec le personnel sur le site. Le poste de surveillance appelle le site concerné, par

TABLEAU 1

| EVENEMENTS ANORMAUX / ETAPES EFFECTUEES | BRUIT ET/OU CHOCS SUR SITE | DEFAUT DU SIGNAL VIDEO | TEST | DEFAUT LIGNE 41 VIDEO | DEFAUT LIGNE 40 DIGITALE-PHONIQUE | COUPURE SECTEUR | OUVERTURE DE L'AGENCE | FERMETURE DE L'AGENCE | DEFAUT SUR MEMOIRE |
|---|---|---|---|---|---|---|---|---|---|
| TRANSMISSION DU CODE NUMERIQUE D'ALARME INITIALE | OUI | OUI | OUI | OUI | OUI dès réapparition ligne | oui | OUI "mise marche" | OUI "mise arrêt" | OUI |
| TRANSMISSION DES SONS | OUI | OUI | OUI | OUI | OUI dès réapparition ligne | OUI | NON | NON | OUI |
| TRANSMISSION DE L'IMAGE VIDEO | OUI | SELON POSSIBILITES | OUI | NON | OUI | NON | NON | NON | OUI |
| ENREGISTREMENT DE l'IMAGE EMISE SUR SITE | OUI | NON | NON | OUI | OUI | NON | NON | NON. | OUI |
| ALARME LOCALE SONORE AU POSTE DE SURVEILLANCE | OUI | OUI | OUI | OUI | OUI | OUI | NON | NON | OUI |
| ENREGISTREMENT SUR MAGNETOSCOPE AU POSTE DE SURVEILLANCE | OUI | NON | OUI | NON | OUI | NON | NON | NON | OUI |
| ALARME LOCALE SUR SITE | NON | NON | NON | OUI | | OUI | NON | NON | OUI |

exemple le transmetteur-numéroteur 35 digital-phonique par la ligne 51 sonique, et le transmetteur-numéroteur 35 digital-phonique déclenche la procédure de test.

En cas de défaut de la ligne téléphonique 41 permettant la transmission des images vidéo en provenance des moyens 4 d'observation vidéo, on déclenche l'alarme initiale, la transmission sonique, et une alarme sonore au poste de surveillance. Il y a de préférence enregistrement de l'image sur le site grâce au magnétophone 37. Lorsque les deux lignes téléphoniques 41 et 40 sont en défaut, une alarme est déclenchée sur le site.

En cas de défaut de la ligne 40 digitale-phonique, seule l'image vidéo peut être transmise au poste de surveillance. Cet évènement est grave, car il empêche la transmission du code numerique d'alarme initiale et des sons. C'est pourquoi on peut prévoir une alarme locale sur le site, une alarme sonore au poste de surveillance, l'enregistrement de l'image sur le site et au poste de surveillance, et le déroulement complet du procédé après retablissement de la ligne. Le personnel du poste de surveillance saura facilement identifier cet évènement lorsqu'il ne recevra qu'une image vidéo, sans alarme initiale et sans transmission sonique. L'identification du site peut être émise sur l'image transmise.

La coupure du secteur engendre l'alarme initiale, la transmission sonique, mais empêche la transmission vidéo. Ce qui implique d'ailleurs le déclenchement des étapes de l'évènement "défaut du signal vidéo". En variante, on prévoit que les moyens 4 d'observation vidéo sont secourus par la batterie 43, ce qui autoriserait la transmission vidéo même en cas de coupure du secteur.

Les évènements "ouverture de l'agence" et "fermeture de l'agence" permettent d'enclencher la mise en route du dispositif à certaines heures, et d'interrompre son fonctionnement. En effet l'invention est particulièrement efficace de jour, et peut être remplacée de nuit par d'autres dispositifs, bien qu'elle reste totalement efficace également pour la surveillance de nuit.

En cas de défaut sur l'armoire comportant le dispositif sur le site, tel que ouverture intempestive, ou chocs ou autres, il s'agit d'une agression manifeste, et toutes les étapes sont déclenchées.

L'invention peut faire l'objet de nombreuses variantes de réalisation évidentes à l'homme du métier qui ne sortent pas du cadre de l'invention dont seul un mode de réalisation préferentiel a été décrit à titre d'exemple.

REVENDICATIONS

1. Dispositif de surveillance a distance d'au moins un site caractérise en combinaison en ce qu'il comporte sur chacun des sites a surveiller d'une part des moyens (1) analyseurs d'ambiance comportant des moyens (2) de détection d'évenements anormaux, des moyens (3) capteurs d'écoute sonique, et des moyens (4) d'observation video, et d'autre part des moyens (5) de transmission des informations entre les moyens (1) analyseurs d'ambiance et le poste de surveillance, en ce que les moyens (4) d'observation video fournissent en permanence un signal video aux moyens (5) de transmission, en ce que les moyens (5) de transmission sont normalement a l'etat inactif et en ce que ces moyens (5) de transmission sont mis a l'etat actif soit sur appel du poste de surveillance, soit par les moyens (2) de detection au moins lorsque un ou plusieurs des evenements suivants se deroulent :

- bruits et/ou chocs d'amplitude superieure à une amplitude donnee sur le site concerne,

- défaut sur le signal video fourni par les moyens (4) d'observation video,

- defaut d'alimentation electrique et/ou d'éclairage sur le site concerne,

- defaut d'une partie des moyens (5) de transmission.


2. Dispositif selon la revendication 1, caractérisé en ce que les moyens (2) de détection comportent des moyens (6) d'analyse du signal vidéo émis par les moyens (4) d'observation vidéo, et déclenchent la mise à l'état actif des moyens (5) de transmission dès que ce signal vidéo est modifié anormalement, notamment par masquage ou éblouissement, ou déréglage, ou déplacement, ou défaut de fonctionnement, ou autre, des moyens (4) d'observation.


3. Dispositif selon la revendication 2 caractérisé en ce que les moyens (6) d'analyse du signal video comparent l'amplitude du signal video à un seuil haut et à un seuil bas d'amplitude, toute variation de l'amplitude du signal vidéo en dehors de l'intervalle defini par ces seuils déclenchant la mise à l'état

$0236170$

actif des moyens (5) de transmission.

4. Dispositif selon l'une quelconque des revendications 1 et 3, caractérisé en ce que les moyens (2) de détection comportent des moyens (15) capteurs des bruits et/ou chocs survenant sur le site et des moyens (16) d'analyse et de comptage des signaux émis par ces moyens (15) capteurs, et en ce que ces moyens (16) d'analyse et de comptage déclenchent la mise à l'état actif des moyens (5) de transmission au moins dans l'un des cas suivants:

- le nombre de bruits et/ou chocs détectés pendant respectivement au moins un temps $t_1$, $t_2$,... donné d'amplitude supérieure à respectivement au moins une amplitude $A_1$, $A_2$,... donnée, est supérieur à respectivement au moins un nombre $N_1$, $N_2$,... donné,

- au moins un bruit et/ou choc a une amplitude supérieure à respectivement au moins une amplitude $B_1$,..., donnée pendant un temps supérieur à respectivement au moins un temps $t'_1$,..., donné.

5. Dispositif selon la revendication 4, caractérisé en ce que les moyens (15) capteurs de bruits et/ou chocs sont des moyens (15) capteurs d'écoute sonique à seuil de déclenchement réglable, notamment au moins un microphone miniature piézo-électrique, ne fournissant aux moyens (16) d'analyse et de comptage que les signaux correspondant à des sons dont l'amplitude est supérieure à une amplitude As donnée.

6. Dispositif selon l'une quelconque des revendications 4 et 5, caractérisé en ce que les moyens (2) de détection comportent des moyens de réglage des amplitudes de seuil $A_1$, $A_2$,..., $B_1$,... et/ou des temps de comptage $t_1$, $t_2$,..., $t'_1$,... et/ou des nombres seuils $N_1$, $N_2$,..., des moyens (16) d'analyse et de comptage, chaque valeur étant réglable indépendamment.

7. Dispositif selon l'une quelconque des revendications 4 à 6, caractérisé en ce que les moyens (16) d'analyse et de comptage déclenchent la mise à l'état actif des moyens (5) de transmission au moins dans les cas où le nombre N de bruits et/ou chocs détectés pendant un temps $t_1$ donné d'amplitude supérieure à une

amplitude $A_1$ donnée, est supérieur à un nombre $N_1$ donné, ou bien le nombre $N'$ de bruits et/ou chocs détectés pendant un temps $t_2$ donné d'amplitude supérieure à une amplitude $A_2$ donnée, est supérieur à un nombre $N_2$ donné, le triplet $(A_1, t_1, N_1)$ étant différent du triplet $(A_2, t_2, N_2)$, ou bien au moins un bruit et/ou choc a une amplitude supérieure à une amplitude $B_1$ donnée pendant un temps supérieur à un temps $t'_1$.

8. Dispositif selon les revendications 5 et 7, caractérisé en ce que $A_1$ est égal à $A_2$, et correspond à l'amplitude As de seuil des moyens (15) capteurs à seuil de déclenchement.

9. Dispositif selon l'une quelconque des revendications 1 à 8, caractérisé en ce que les moyens (5) de transmission comportent un transmetteur-numéroteur (35) qui, à réception du signal de commande en provenance des moyens (2) de détection déclenchant la mise à l'état actif de ces moyens (5) de transmission, établit une liaison avec le poste de surveillance et transmet un code numérique d'alarme initiale permettant d'identifer le site concerné et la nature approximative de l'évènement anormal qui est à l'origine du passage à l'état actif des moyens (5) de transmission.

10. Dispositif selon la revendication 9, caractérisé en ce que le transmetteur-numéroteur (35), après avoir transmis le code numérique d'alarme initiale, établit une autre liaison avec le poste de surveillance, par laquelle il transmet les sons en provenance des moyens (3) capteurs d'écoute sonique.

11. Dispositif selon l'une quelconque des revendications 1 à 10, caractérisé en ce que les moyens (5) de transmission comportent un transmetteur-numéroteur (36) qui, à réception du signal de commande en provenance des moyens (2) de détection déclenchent la mise à l'état actif de ces moyens (5) de transmission, établit une liaison avec le poste de surveillance et y transmet les images vidéo numérisées en provenance des moyens (4) d'observation.

12. Dispositif selon l'une quelconque des revendications 4 à 11, caractérisé en ce que les moyens (15) capteurs des moyens (2) de détection sont disposés sur chaque site à proximité des moyens (4) d'observation vidéo.

13. Dispositif selon l'une quelconque des revendications 1 à 12, caractérisé en ce que les moyens (4) d'observation vidéo sont constitués d'au moins une caméra vidéo dissimulée dont l'objectif à un diamètre inférieur à 5 mm, notamment de l'ordre de 3,5 mm.

14. Dispositif selon l'une quelconque des revendications 1 à 13, caractérisé en ce qu'il comporte des moyens (42) d'analyse de l'alimentation électrique disponible sur le site, et une source (43) d'énergie électrique de secours, notamment une batterie d'accumulateurs, alimentant les moyens (2) de détection et/ou (3) capteurs d'écoute sonique et/ou d'observation vidéo en cas de défaillance de l'alimentation électrique disponible sur le site.

15. Dispositif selon l'une quelconque des revendications 1 à 14, caractérisé en ce que les moyens (5) de transmission comportent plusieurs lignes téléphoniques (38) et des moyens (35, 36) d'appel automatique du poste de surveillance par ces lignes téléphoniques, établissant automatiquement les communications nécessaires à la transmission des informations entre le site concerné et le poste de surveillance lorsque les moyens (5) de transmission sont mis à l'état actif, et en ce que les moyens(2) de détection comportent des circuits (39) de test de ces lignes téléphoniques (38) qui déclenchent la mise à l'état actif des moyens (5) de transmission lorsqu'ils détectent un défaut sur au moins l'une des lignes téléphoniques (38).

16. Dispositif selon la revendication 15, caractérisé en ce que les moyens (5) de transmission comportent au moins une ligne téléphonique réservée exclusivement à la transmission des images vidéo en provenance des moyens (4) d'observation, vers le poste de surveillance.

17. Dispositif selon l'une quelconque des revendications 15 et 16, caractérisé en ce que les moyens (5) de transmission comportent deux lignes téléphoniques (40, 41) : l'une (40) est réservée tout d'abord à la transmission du code numérique d'alarme initiale et ensuite à la transmission des sons en provenance des moyens (3) capteurs d'écoute sonique tandis que l'autre (41) est réservée strictement à la transmission des images vidéo.

18. Dispositif selon l'une quelconque des revendications 1 à 17, caractérisé en ce que les moyens (5) de transmission comportent sur chaque site des moyens (7) de conversion du signal vidéo issu des moyens (4) d'observation vidéo en un signal numérique transmissile par une liaison téléphonique, et comportent au poste de surveillance des moyens (46) de réception qui transforment ce signal numérique en un signal vidéo qui peut être transformé en images vidéo.

19. Dispositif selon l'une quelconque des revendications 1 à 18, caractérisé en ce que les moyens (5) de transmission comportent au poste de surveillance des moyens (47) récepteurs d'écoute sonique, des moyens (46, 48) de réception et production des images vidéo en provenance des moyens (4) d'observations vidéo, des moyens (49) digitaux de réception du code numérique d'alarme initiale et au moins trois lignes (50, 51, 52) téléphoniques accédant respectivement à chacun de ces moyens (46, 47, 49) de réception.

20. Dispositif selon l'une quelconque des revendications 1 à 19, caractérisé en ce qu'il comporte au poste de surveillance des moyens (57) informatiques, fournissant au personnel du poste de surveillance, en fonction du code numérique d'alarme initiale qui leur est fourni, tous les renseignements utiles concernant le site, l'évènement anormal qui s'est produit et les consignes à appliquer.

21. Dispositif selon la revendication 20, caractérisé en ce que les moyens (57) informatiques du poste de surveillance comportent des moyens de calcul statistique permettant d'optimiser les réglages des moyens (2) de détection sur chacun des sites surveillés.

26

0236170

22. Dispositif selon l'une quelconque des revendications 1 à 21, caractérisé en ce qu'il comporte des moyens d'alarme locale sur chaque site surveillé, déclenchés par les moyens (2) de détection au moins lorsque les moyens (5) de transmission sont défaillants.

23. Procédé de surveillance à distance d'au moins un site relié à un poste central de surveillance par des moyens (5) de transmission dès que ces moyens (5) de transmission sont mis à l'état actif -notamment par des moyens (2) de détection lorsqu'ils ont détecté un évènement anormal sur un site- caractérisé en ce qu'il comporte les étapes suivantes, qui se déroulent chronologiquement:

   - Etablissement d'au moins une liaison entre le site concerné et le poste de surveillance,

   - transmission au poste de surveillance d'un signal d'alarme initiale permettant d'identifier le site concerné et de connaître approximativement la nature de l'évènement anormal, notamment bruits ou chocs sur site, défaut de moyens (4) d'observation vidéo, test, défaut sur secteur,défaut des moyens (5) de transmission, défaut des dispositifs sur le site,

   - transmission au poste de surveillance des images vidéo en provenance des moyens (4) d'observation et/ou des sons en provenance des moyens (3) capteurs d'écoute sonique, et

   - analyse du site par le personnel du poste de surveillance grâce aux images et/ou aux sons reçus, et identification exacte de l'évènement anormal,

   - gestion de l'alarme par le personnel du poste de surveillance.

24. Procédé selon la revendication 23, caractérisé en ce que l'on établit deux liaisons téléphoniques entre le site concerné et le poste de surveillance, la transmission des images vidéo étant déclenchée simultanément à la transmission du signal d'alarme initial, et la transmission des sons étant déclenchée sur la même liaison que la transmission du signal d'alarme, immédiatement après.

FIG.1

0236170

# FIG. 2

FIG. 3

3/3

0236170

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 551 240   (ARPHI)<br><br>* Revendications *<br><br>--- | 1,9-12<br>,13,18<br>-20,22<br>-23 | G 08 B   13/18<br>H 04 M   11/04 |
| A | ELECTRONIQUE ET APPLICATIONS-INDUSTRIELLES, no. 271, juin 1979, pages 47-49, Paris, FR; "Surveillance vidéo avec mémorisation d'images numériques"<br>* En entier *<br><br>--- | 1,9-12<br>,13,18<br>-20,23 | |
| A | AU-B- 520 219  (COMMERCIAL DATA ALARM SYSTEM)<br>* Revendications *<br><br>--- | 2-3 | |
| A | FR-A-2 528 487  (SECURITON)<br>* Revendications 1-5 *<br><br>--- | 4-8 | DOMAINES TECHNIQUES RECHERCHES (Int. Cl.4)<br><br>G 08 B<br>H 04 M |
| A | FR-A-2 519 450  (MAILLOT)<br>* En entier *<br><br>--- | 14-17 | |
| A | FR-A-2 290 716  (A. HALBERTHAL et al.)<br>* En entier *<br><br>--- | 9-11 | |
| A | CH-A- 651 984  (DUCROT)<br>* En entier *<br><br>----- | 1,23 | |

Le présent rapport de recherche a été établi pour toutes les revendications

| Lieu de la recherche | Date d'achèvement de la recherche | Examinateur |
|---|---|---|
| LA HAYE | 21-05-1987 | REEKMANS M.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82